# FASCICULE DE BREVET EUROPEEN

(11) **EP 1 789 271 B1**
(45) Date de publication et mention de la délivrance du brevet: **15.09.2010**
(21) Numéro de dépôt: 05753730.0
(22) Date de dépôt: 07.04.2005
(51) Int. Cl.: B60G 21/05

(54) **ESSIEU SOUPLE DE VEHICULE AUTOMOBILE COMPRENANT UNE TRAVERSE INTEGRANT UNE FONCTION ANTI-DEVERS, TRAVERSE, PROCEDE DE FABRICATION ET VEHICULE CORRESPONDANTS.**
FLEXIBLE KRAFTFAHRZEUGACHSE MIT EINEM QUERTRÄGER, DER EINE STABILISATORFUNKTION INTEGRIERT, ENTSPRECHENDER QUERTRÄGER, HERSTELLUNGSVERFAHREN UND FAHRZEUG
MOTOR VEHICLE FLEXIBLE AXLE COMPRISING A CROSS MEMBER THAT INTEGRATES AN ANTI-SWAY FUNCTION, CORRESPONDING CROSS MEMBER, PRODUCTION METHOD AND VEHICLE

(30) Priorité: 02.09.2004 FR 0409295
(43) Date de publication de la demande: 30.05.2007
(73) Titulaire: Auto Chassis International SNC Lem Ctc 0.06, 75086 Le Mans Cédex 9 (FR)
(72) Inventeur: CHABROL, Thierry, F-78150 Le Chesnay (FR); COUMERT, Stéphane, F-75015 Paris (FR); PATIGNIEZ, Alain Crystal Court Toriizaka, Minato-ku, Tokyo 106-0032 (JP); DE POMPIGNAN, Alexis, 72000 Le Mans (FR); ROULIN, François, F-92000 Nanterre (FR)
(74) Mandataire: Religieux, Vincent
(86) Numéro de dépôt international: PCT/FR2005/000855
(87) Numéro de publication internationale: WO 2006/027429

(56) Documents cités:
- EP-A- 1 078 785
- US-A- 5 310 210
- US-A- 5 324 073
- US-A- 6 145 271

## Description

Le domaine de l'invention est celui des suspensions de véhicule automobile. Plus précisément, l'invention concerne les essieux souples pour roues non motrices d'un véhicule automobile, et notamment la façon de réaliser la fonction raideur anti-dévers de cet essieu.

Actuellement, sur les essieux souples, la fonction anti-dévers est réalisée suivant différentes technologies. L'une d'elle est exposée par le document US 5 324 073.

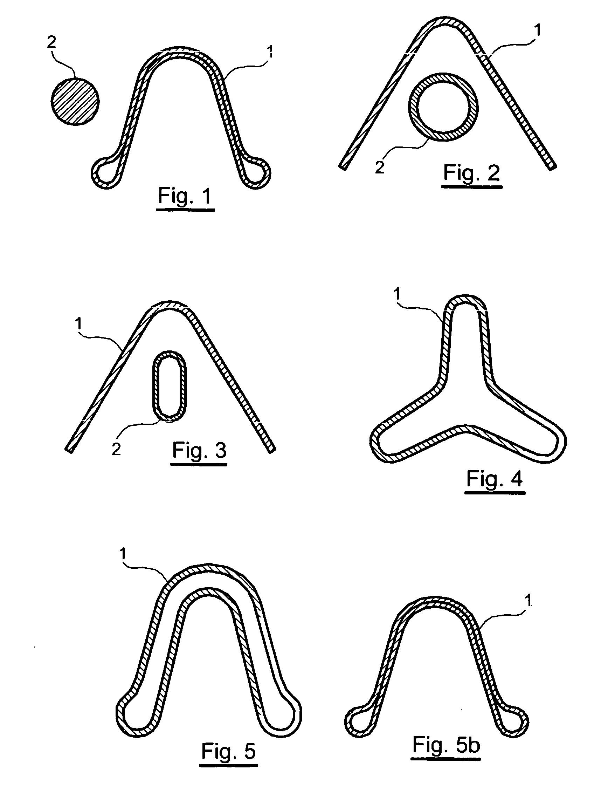

Une première technologie consiste à utiliser deux traverses 1 reliant les deux bras longitudinaux de l'essieu et une barre de torsion 2 (barre anti-dévers) rapportée assurant la plus grande partie de la raideur anti-dévers. Différents modes de mise en oeuvre de cette technique sont illustrés par les figures 1,2, et 3.

Cette barre de section cylindrique creuse, pleine ou de forme oblongue creuse, est reliée à l'essieu soit par soudage sur les bras longitudinaux de l'essieu, soit par soudage sur des supports spécifiques reliés à l'essieu (exemple : Renault Clio (marques déposées)).

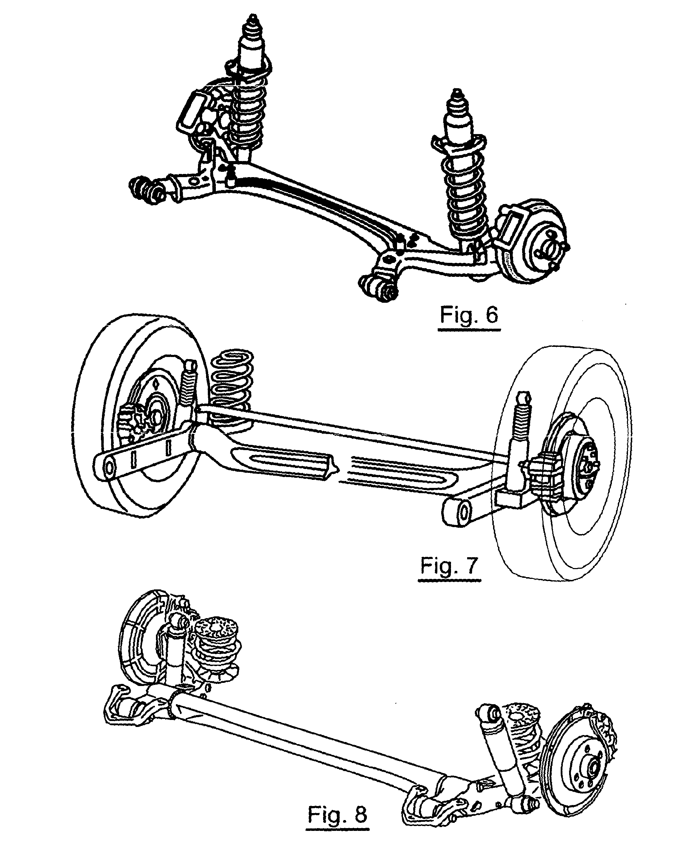

Dans certains cas, la liaison entre la barre de torsion et l'essieu est assurée par assemblage vissé (exemple : Toyota Prius (marques déposées), comme illustré par la figure 6).

La diversité de raideurs est assurée en modifiant les dimensions (diamètre et épaisseur) de la barre de torsion. Cette première technologie présente les inconvénients suivants :
- le coût de la barre de torsion ;
- la masse de la barre de torsion
- la liaison entre la barre de torsion et l'essieu peut être difficile car très contrainte et localisée à une zone de faible dimension ;
- le mode vibratoire de la barre est gênant dans certains cas.

On connaît une deuxième technologie selon laquelle un élément est rapporté sur la traverse de façon à définir, en combinaison avec cette dernière, un corps creux s'étendant parallèlement à l'axe de la traverse, au moins sur une portion de celle-ci, de façon à apporter une raideur anti-dévers.

On comprend que cette technologie implique la réalisation d'étapes de fabrication spécifiques liées à l'obtention de l'élément à rapporter et à la solidarisation de celui-ci sur la traverse.

Ces étapes tendent bien entendu à augmenter le prix de revient de la traverse et, par conséquent, celui de l'essieu.

En outre, l'élément rapporté présente l'inconvénient d'alourdir la traverse, ce qui n'est pas souhaitable.

Une troisième technologie consiste à intégrer la fonction raideur anti-dévers à la traverse 1, comme illustré par les figures 4, 5 et 5b.

Dans ce cas, la traverse est constituée d'un tube formé dans sa partie centrale afin d'obtenir les raideurs souhaitées en torsion et flexion (exemple : Peugeot 806 (marques déposées), illustré par la figure 7, ou Opel Zafira (marques déposées), illustré par la figure 8).

La diversité de raideur anti-dévers en fonction des besoins est assurée par modification de la forme de la section de la traverse.

Cette technologie présente notamment l'inconvénient d'engendrer des coûts d'outillages élevés pour gérer les diversités de raideurs. En effet pour chaque raideur anti-dévers souhaitée un outillage de formage de la traverse est nécessaire.

L'invention a notamment pour objectif de pallier les différents inconvénients des techniques connues.

Plus précisément, un premier objectif de l'invention est de fournir des essieux souples pour véhicules automobiles, et un procédé de fabrication correspondant, permettant d'assurer la raideur anti-dévers de l'essieu, en dehors de l'apport de raideur des ressorts de suspension, sans utiliser de barre de torsion.

Ainsi, un objectif de l'invention est de fournir de tels essieux, qui soient faciles à fabriquer, sans nécessiter d'outillage spécifique ou complexe, et qui présentent en conséquence un prix de revient réduit, par rapport à l'art antérieur.

Un autre objectif de l'invention est de fournir de tels essieux dont le poids est réduit, par rapport à ceux mettant en oeuvre une barre de torsion.

Encore un autre objectif de l'invention est de fournir une technique permettant une gestion simple, efficace et à coût réduit de la diversité de raideur anti-dévers, en fonction des modèles et des besoins.

Ces objectifs, ainsi que d'autres qui apparaîtront par la suite, sont atteints grâce à l'invention qui a pour objet un essieu souple de véhicule automobile, comprenant une traverse reliant deux bras longitudinaux, ladite traverse présentant deux flancs reliés en une partie supérieure de ladite traverse, caractérisé en ce qu'au moins une paroi de ladite traverse présente une déformation s'étendant longitudinalement entre lesdits flancs, ladite déformation étant réalisée dans ladite paroi de façon à présenter une section fermée ou essentiellement fermée.

De cette façon, la fonction anti-dévers est intégrée à la traverse, la déformation longitudinale entre les flancs de la traverse faisant office de barre anti-dévers.

Un essieu selon l'invention permet donc d'éviter les inconvénients de coût et de masse liés à l'adjonction d'une barre anti-dévers traditionnelle.

Par ailleurs, la déformation d'une paroi de la traverse selon l'invention permet de rapprocher la zone raide en torsion du centre de torsion de l'essieu et donc d'améliorer le comportement de celui-ci.

Selon une solution avantageuse, ladite traverse est réalisée par emboutissage à partir d'une unique pièce en tôle.

La traverse de l'essieu est ainsi obtenue de façon simple et peu coûteuse à l'aide d'une technique maîtrisée.

Une telle traverse peut donc, à partir d'une pièce de tôle unique, satisfaire les critères d'inertie en flexion et de raideur en torsion.

Il est toutefois envisageable de rapporter, par exemple sur les flancs de la traverse, un ou plusieurs éléments visant à augmenter encore la raideur en torsion. Mais ceci serait au détriment du coût et du poids de la traverse comme déjà expliqué précédemment en référence à l'art antérieur.

Selon une solution préférée, lesdits flancs présentent des prolongements qui se rejoignent tangentiellement pour former une zone de fermeture, et en ce que lesdits prolongements continuent à s'étendre à partir de ladite zone de fermeture, entre lesdits flancs, pour former ladite section.

Une telle traverse s'avère simple de conception et peut être réalisée aisément, notamment par une ou plusieurs étapes d'emboutissage.

On note que le terme « essentiellement fermée » mentionné précédemment englobe le cas ou la section laisse apparaître un léger jeu entre les prolongements, au niveau de la zone de fermeture. Un tel jeu peut par exemple être comblé par un cordon de soudure tel que cela va apparaître plus clairement par la suite.

Préférentiellement, il comprend des moyens de solidarisation desdits prolongements dans ladite zone de fermeture ou au voisinage de celle-ci.

Dans ce cas, lesdites moyens de solidarisation comprennent avantageusement au moins un cordon de soudure.

Une telle technique s'avère efficace et d'un coût de revient réduit, puisqu'elle ne nécessite pas d'outillage spécifique à chaque type d'essieu mais utilise au contraire des moyens classiques de soudage.

L'invention concerne également une traverse destinée à équiper un essieu souple de véhicule automobile, du type présentant deux flancs reliés en une partie supérieure de ladite traverse, caractérisé en ce qu'au moins une paroi de ladite traverse présente une déformation s'étendant longitudinalement entre lesdits flancs, ladite déformation étant réalisée dans ladite paroi de façon à présenter une section fermée ou essentiellement fermée.

L'invention concerne aussi un procédé de fabrication d'un essieu souple de véhicule automobile comprenant une traverse reliant deux bras longitudinaux, ladite traverse présentant deux flancs reliés en une partie supérieure de ladite traverse, caractérisé en ce qu'il comprend une étape de fabrication de ladite traverse consistant à déformer au moins une paroi de ladite traverse de façon que ladite paroi présente une déformation s'étendant longitudinalement entre lesdits flancs, ladite déformation étant réalisée dans ladite paroi de façon à présenter une section fermée ou essentiellement fermée.

L'invention concerne encore un véhicule automobile comprenant un essieu une traverse reliant deux bras longitudinaux, ladite traverse présentant deux flancs reliés en une partie supérieure de ladite traverse, caractérisé en ce qu'au moins une paroi de ladite traverse présente une déformation s'étendant longitudinalement entre lesdits flancs, ladite déformation étant réalisée dans ladite paroi de façon à présenter une section fermée ou essentiellement fermée.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation d'une section d'un ensemble traverse et barre de torsion selon un premier mode de réalisation de l'état de la technique ;
- la figure 2 est une représentation d'une section d'un ensemble traverse et barre de torsion selon un deuxième mode de réalisation de l'état de la technique ;
- la figure 3 est une représentation d'une section d'un ensemble traverse et barre de torsion selon un troisième mode de réalisation de l'état de la technique ;
- la figure 4 est une représentation d'une section d'une traverse intégrant la fonction raideur anti-dévers selon l'état de la technique ;
- la figure 5 est une représentation d'une section d'une traverse intégrant la fonction raideur anti-dévers selon un deuxième mode de réalisation de l'état de la technique ;
- la figure 5b est une représentation d'une section d'une traverse intégrant la fonction raideur anti-dévers selon un troisième mode de réalisation de l'état de la technique ;
- la figure 6 est une représentation schématique d'un essieu dont la barre de torsion est liée par vissage à l'essieu selon l'état de la technique ;
- la figure 7 est une représentation schématique d'un essieu dont la

fonction raideur anti-dévers est intégrée à la traverse selon l'état de la technique ;
- la figure 8 est une représentation schématique d'un essieu dont la fonction raideur anti-dévers est intégrée à la traverse selon un deuxième mode de réalisation de l'état de la technique.
- la figure 9 est une vue d'une section de traverse selon un premier mode de réalisation de l'invention ;
- la figure 10 est une vue d'une section de traverse selon un deuxième mode de réalisation de l'invention.

La présente invention procède donc d'une recherche de conception de la fonction anti-dévers d'un essieu souple en vue d'écarter les difficultés et problèmes susmentionnés.

A cet effet, l'invention propose donc de réaliser la fonction anti-dévers d'un essieu souple à l'aide d'une déformation réalisée dans une paroi de la traverse, cette déformation s'étendant longitudinalement entre les flancs et présentant une section fermée ou essentiellement fermée.

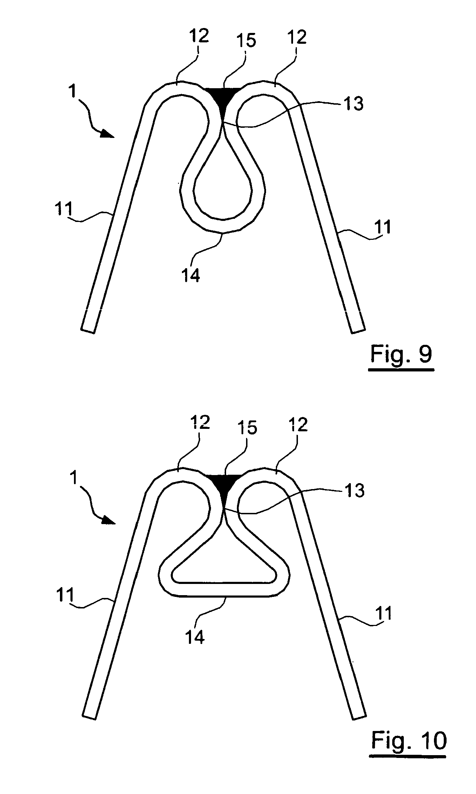

Ceci est illustré par la figure 9 qui montre une traverse 1 d'essieu souple destinée à relier deux bras longitudinaux, la traverse comprenant deux flancs 11 reliés entre eux.

Tel qu'illustré, la liaison entre les flancs 11 est obtenue par l'intermédiaire de prolongements 12 des flancs qui se rejoignent tangentiellement par niveau d'une zone de fermeture 13.

De plus, les prolongements 12 continuent à s'étendre à partir de la zone de fermeture 13, entre les flancs 11, pour former une section fermée 14 ou essentiellement fermée.

On note qu'une telle traverse est obtenue à partir d'une unique pièce de tôle mise en forme par un procédé d'emboutissage.

Comme déjà indiqué précédemment, il est envisageable qu'à l'issue de l'emboutissage de la pièce en tôle destinée à former la traverse, les prolongements 12 ne soient pas tout à fait en contact l'un avec l'autre. Comme déjà indiqué, le terme « essentiellement fermée » englobe ce cas de figure.

Selon le mode de réalisation illustré par la figure 9, la section de la déformation 14 présente une forme arrondie dont une partie est circulaire.

Selon un autre mode de réalisation illustré par la figure 10, la déformation 14 présente une section selon laquelle elle fait apparaître une forme aplatie à sa base.

Bien entendu, la section de cette déformation peut présenter d'autres formes selon d'autres mode de réalisation envisageables.

En effet, cette déformation permet d'obtenir la raideur anti-dévers souhaitée. Or, la gestion de la diversité des raideurs anti-dévers est réalisée en modifiant éventuellement la forme et les dimensions de la déformation 14.

Cette diversité se gère du fait que la raideur en torsion apportée par une déformation selon l'invention peut aisément être calculée.

Par ailleurs, les prolongements 12 sont maintenus solidairement, en contact, l'un de l'autre à l'aide d'un cordon de soudure 15 déposé entre les prolongements 12 dans la gorge formée par ceux-ci au dessus de la zone de fermeture 13.

## Revendications

1. Essieu souple de véhicule automobile, comprenant une traverse (1) reliant deux bras longitudinaux, ladite traverse (1) présentant deux flancs (11) reliés en une partie supérieure de ladite traverse (1),
**caractérisé en ce qu'**au moins une paroi formant la partie supérieure de ladite traverse (1) présente une déformation (14) s'étendant longitudinalement entre lesdits flancs (11), ladite déformation (14) étant réalisée dans ladite paroi de façon à présenter une section fermée ou essentiellement fermée.

2. Essieu souple selon la revendication 1, **caractérisé en ce que** ladite traverse (1) est réalisée par emboutissage à partir d'une unique pièce en tôle.

3. Essieu souple selon l'une des revendications 1 et 2, **caractérisé en ce que** lesdits flancs (11) présentent des prolongements (12) qui se rejoignent tangentiellement pour former une zone de fermeture (13), et **en ce que** lesdits prolongements (12) continuent à s'étendre à partir de ladite zone de fermeture (13), entre lesdits flancs (11), pour former ladite section.

4. Essieu souple selon la revendication 3, **caractérisé en ce qu'**il comprend des moyens de solidarisation desdits prolongements (2) dans ladite zone de fermeture (13) ou au voisinage de celle-ci.

5. Essieu souple selon la revendication 4, **caractérisé en ce que** lesdits moyens de solidarisation comprennent au moins un cordon de soudure (15).

6. Traverse (1) destinée à équiper un essieu souple de véhicule automobile, du type présentant deux flancs (11) reliés en une partie supérieure de ladite traverse (1),
**caractérisé en ce qu'**au moins une paroi formant la partie supérieure de ladite traverse (1) présente une déformation s'étendant longitudinalement entre lesdits flancs (11), ladite déformation (14) étant réalisée dans ladite paroi de façon à présenter une section fermée ou essentiellement fermée.

7. Procédé de fabrication d'un essieu souple de véhicule automobile comprenant une traverse (1) reliant deux bras longitudinaux, ladite traverse (1) présentant deux flancs (11) reliés en une partie supérieure de ladite traverse (1),
**caractérisé en ce qu'**il comprend une étape de fabrication de ladite traverse (1) consistant à déformer au moins une paroi formant la partie supérieure de ladite traverse (1) de façon que ladite paroi présente une déformation (14) s'étendant longitudinalement entre lesdits flancs (11), ladite déformation étant réalisée dans ladite paroi de façon à présenter une section fermée ou essentiellement fermée.

8. Véhicule automobile comprenant un essieu comprenant une traverse (1) reliant deux bras longitudinaux, ladite traverse (1) présentant deux flancs (11) reliés en une partie supérieure de ladite traverse (1),
**caractérisé en ce qu'**au moins une paroi formant la partie supérieure de ladite traverse (1) présente une déformation (14) s'étendant longitudinalement entre lesdits flancs (11), ladite déformation (14) étant réalisée dans ladite paroi de façon à présenter une section fermée ou essentiellement fermée.

## Claims

1. Motor vehicle flexible axle, comprising a cross member (1) connecting two longitudinal arms, said cross member (1) having two sides (11) connected at a top portion of said cross member (1),
**characterized in that** at least one wall forming the top portion of said cross member (1) has a deformation (14) extending longitudinally between said sides (11), said deformation (14) being made in said wall so as to have a closed or essentially closed section.

2. Flexible axle according to Claim 1, **characterized in that** said cross member (1) is made by pressing from a single piece of metal sheet.

3. Flexible axle according to either of Claims 1 and 2, **characterized in that** said sides (11) have extensions (12) that join tangentially to form a zone of closure (13), and **in that** said extensions (12) continue to extend from said zone of closure (13) between said sides (11), to form said section.

4. Flexible axle according to Claim 3, **characterized in that** it comprises means of fixedly attaching said extensions (12) in said zone of closure (13) or in the vicinity of the latter.

5. Flexible axle according to Claim 4, **characterized in that** said fixed attachment means comprise at least one bead of weld (15).

6. Cross member (1) designed to be fitted to a motor vehicle flexible axle, of the type having two sides (11) connected at a top portion of said cross member (1),
**characterized in that** at least one wall forming the top portion of said cross member (1) has a deformation extending longitudinally between said sides (11), said deformation (14) being made in said wall so as to have a closed or essentially closed section.

7. Method for manufacturing a motor vehicle flexible axle comprising a cross member (1) connecting two longitudinal arms, said cross member (1) having two sides (11) connected at a top portion of said cross member (1),
**characterized in that** it comprises a step of manufacturing said cross member (1) consisting in deforming at least one wall forming the top portion of said cross member (1) so that said wall has a deformation (14) extending longitudinally between said sides (11), said deformation being made in said wall so as to have a closed or essentially closed section.

8. Motor vehicle comprising an axle which comprises a cross member (1) connecting two longitudinal arms, said cross member (1) having two sides (11) connected at a top portion of said cross member (1),
**characterized in that** at least one wall forming the top portion of said cross member (1) has a deformation (14) extending longitudinally between said sides (11), said deformation (14) being made in said wall so as to have a closed or essentially closed section.

## Patentansprüche

1. Flexible Achse eines Kraftfahrzeugs, die einen zwei Längsarme verbindenden Querträger (1) enthält, wobei der Querträger (1) zwei Flanken (11) aufweist, die in einem oberen Bereich des Querträgers (1) verbunden sind,
**dadurch gekennzeichnet, dass** mindestens eine den oberen Bereich des Querträgers (1) bildende Wand eine Verformung (14) aufweist, die sich in Längsrichtung zwischen den Flanken (11) erstreckt, wobei die Verformung (14) so in der Wand ausgebildet ist, dass sie einen geschlossenen oder im Wesentlichen geschlossenen Querschnitt aufweist.

2. Flexible Achse nach Anspruch 1, **dadurch gekennzeichnet, dass** der Querträger (1) durch Tiefziehen ausgehend von einem einzigen Blechteil hergestellt wird.

3. Flexible Achse nach einem der Ansprüche 1 und 2, **dadurch gekennzeichnet, dass** die Flanken (11) Verlängerungen (12) aufweisen, die sich tangential vereinigen, um eine Schließzone (13) zu formen, und dass die Verlängerungen (12) sich ausgehend von der Schließzone (13) weiter zwischen den Flanken (11) erstrecken, um den Querschnitt zu bilden.

4. Flexible Achse nach Anspruch 3, **dadurch gekennzeichnet, dass** sie Einrichtungen zur festen Verbindung der Verlängerungen (12) in der Schließzone (13) oder in deren Nähe enthält.

5. Flexible Achse nach Anspruch 4, **dadurch gekennzeichnet, dass** die Einrichtungen zur festen Verbindung mindestens eine Schweißnaht (15) enthalten.

6. Querträger (1), der zur Bestückung einer flexiblen Achse eines Kraftfahrzeugs bestimmt ist, von der Art, die zwei Flanken (11) aufweist, die in einem oberen Bereich des Querträgers (1) verbunden sind,
**dadurch gekennzeichnet, dass** mindestens eine den oberen Bereich des Querträgers (1) bildende Wand eine Verformung (14) aufweist, die sich in Längsrichtung zwischen den Flanken (11) erstreckt, wobei die Verformung (14) so in der Wand ausgebildet ist, dass sie einen geschlossenen oder im Wesentlichen geschlossenen Querschnitt aufweist.

7. Verfahren zur Herstellung einer flexiblen Achse eines Kraftfahrzeugs, die einen zwei Längsarme verbindenden Querträger (1) enthält, wobei der Querträger (1) zwei Flanken (11) aufweist, die in einem oberen Bereich des Querträgers (1) verbunden sind, **dadurch gekennzeichnet, dass** es einen Schritt der Herstellung des Querträgers (1) enthält, der darin besteht, mindestens eine den oberen Bereich des Querträgers (1) bildende Wand so zu verformen, dass die Wand eine Verformung (14) aufweist, die sich in Längsrichtung zwischen den Flanken (11) erstreckt, wobei die Verformung so in der Wand ausgebildet ist, dass sie einen geschlossenen oder im Wesentlichen geschlossenen Querschnitt aufweist.

8. Kraftfahrzeug, das eine Achse enthält, die einen zwei Längsarme verbindenden Querträger (1) enthält, wobei der Querträger (1) zwei Flanken (11) aufweist, die in einem oberen Bereich des Querträgers (1) verbunden sind,
**dadurch gekennzeichnet, dass** mindestens eine den oberen Bereich des Querträgers (1) bildende Wand eine Verformung (14) aufweist, die sich in Längsrichtung zwischen den Flanken (11) erstreckt, wobei die Verformung (14) so in der Wand ausgebildet ist, dass sie einen geschlossenen oder im Wesentlichen geschlossenen Querschnitt aufweist.
